# EUROPEAN PATENT APPLICATION

(11) **EP 4 704 009 A1**
(43) Date of publication of application: **04.03.2026**
(21) Application number: 25194425.2
(22) Date of filing: 06.08.2025
(51) Int. Cl.: G06Q 20/38, G06Q 20/40

(54) **SYSTEN, APPARATUS AND METHOD FOR AUTHENTICATION IN PAYMENT TRANSACTIONS**

(30) Priority: 29.08.2024 GB 202412700
(71) Applicant: Safecypher Ltd, Leeds Yorkshire LS16 5HN (GB)
(72) Inventor: JORDAN, Benjamin Marcus, Leeds LS16 5HN (GB)
(74) Representative: Potter, Julian Mark

(57) **Abstract**

A system for dynamic authentication of payment transactions comprises a first computing system communicatively coupled to a computer communications network. The first computing system receives an activation request for a payment instrument from a second computing system, generates and transmits an activation token to the second system, receives an encrypted data item from the second system, and stores the encrypted data item with a payment instrument identifier. During a transaction, the first system receives a verification request with a dynamic authentication code from a payment issuer, retrieves the stored encrypted data item, validates the dynamic code using the data item, and transmits a verification result to the issuer indicating whether the transaction is authenticated based on the validation outcome. The system enables secure dynamic authentication without requiring constant communication between devices.

## Description

### Field

One or more embodiments of the present invention relate to systems and methods for securing electronic payment transactions, particularly in the field of dynamic authentication. More specifically, but not exclusively, the invention pertains to a system and method for generating, managing, and verifying dynamic authentication codes for payment instruments using encrypted time-based one-time passwords (TOTPs). The invention has applications in online and mobile banking, e-commerce, and any scenario where secure, dynamic authentication of payment transactions is required.

### Background

The field of electronic payment transactions has seen significant growth and evolution in recent years, driven by the increasing prevalence of online and mobile commerce. However, with this growth comes an increased risk of fraud and unauthorised transactions. Traditional static authentication methods, such as CVV codes printed on physical cards, have become vulnerable to various forms of attack, including data breaches and card skimming.

One approach to enhancing payment security has been the implementation of dynamic authentication codes, which change for each transaction. However, existing solutions often require constant communication between the user's device and a central server, potentially exposing sensitive information to interception and creating points of failure if network connectivity is lost.

There is a need for a secure, robust system for dynamic authentication in payment transactions that can operate independently after initial setup, resist man-in-the-middle attacks, and provide fallback mechanisms in case of system unavailability. Such a system should also integrate seamlessly with existing payment infrastructures and be scalable to handle high transaction volumes across multiple geographic regions.

Aspects and embodiments in accordance with the present invention were devised with the foregoing in mind.

### Summary

Viewed from a first aspect, the present invention provides a system for dynamic authentication of a payment transaction. This system comprises a first computing system that can be communicatively coupled to a computer communications network. The first computing system is configured to receive a request from a second computing system to activate a payment instrument, where the second computing system is also communicatively couplable to the computer communications network. In response to this request, the first computing system generates an activation token and transmits it to the second computing system. Subsequently, the first computing system receives an encrypted data item from the second computing system, which is sent in response to the second computing system receiving the activation token. The first computing system then stores the encrypted data item along with an identifier of the payment instrument in a database. During a payment transaction, the first computing system receives a verification request from a payment instrument issuer system. This verification request comprises a dynamic authentication code that has been generated by the second computing system and provided to the payment issuer system by a user during the transaction. The first computing system retrieves the encrypted data item associated with the payment instrument's identifier, validates the dynamic authentication code using the data item, and transmits a verification result to the issuer system. This result indicates whether the payment transaction is authenticated based on the validation outcome.

This system provides a secure, centralised platform that manages the entire lifecycle of dynamic authentication codes, from activation to verification, while maintaining the confidentiality of sensitive information. By keeping the encrypted data separate from actual payment instrument details, the system significantly enhances security. The use of dynamic authentication codes makes it extremely difficult for malicious actors to intercept or replicate payment credentials, thereby reducing the risk of fraud. Additionally, the system's ability to work with existing payment infrastructure (such as payment instrument issuer systems) ensures seamless integration and widespread adoption potential.

Optionally, the second computing system further comprises an application configured to interact with the first computing system over the computer communications network, and a secure processing environment. This secure environment is configured to generate the data item, encrypt it to create the encrypted data item, store the encrypted data item in the second computing system, and generate a dynamic authentication code using the stored data item.

This enhances security by generating and storing secrets locally on the user's device. By doing so, it reduces the risk of interception during transmission and allows for offline generation of authentication codes. This approach improves security and also enhances user experience by enabling authentication even in situations with poor or no network connectivity.

Optionally, the encrypted data item is a time-based one-time password (TOTP) secret key, and the dynamic authentication code is a TOTP generated using the TOTP secret key and a current time value.

The use of a time-based one-time password (TOTP) system provides a synchronised, time-dependent authentication mechanism that generates unique codes without requiring constant communication between the device and server. This approach improves security by ensuring that each authentication code is valid only for a short period, making it difficult for attackers to use intercepted codes. Furthermore, it enhances user experience by providing quick and easy authentication without the need for additional user input beyond the generated code.

Optionally, validating the dynamic authentication code comprises generating a verification TOTP using the decrypted data item and a time of the payment transaction, and comparing the generated verification TOTP with the received dynamic authentication code.

This validation process ensures that the dynamic authentication code is both genuine and current. By generating a verification TOTP on the server-side and comparing it with the received code, the system can confirm that the code was generated using the correct secret key and is valid for the current time window. This approach provides a robust method for verifying the authenticity of transactions while maintaining the system's resistance to replay attacks.

Optionally, the second computing device is configured to generate dynamic authentication codes independent of further communications with the first computing system following activation and encrypted data item exchange, until a deactivation request is received from the user or the issuer system.

This configuration increases security and usability by allowing the device to generate authentication codes without network connectivity. By eliminating the need for constant communication with the server, the system reduces the attack surface for potential interceptions. This offline capability enhances security and also improves the user experience by ensuring that authentication can occur even in areas with poor or no network coverage. Additionally, it reduces the load on the server and network infrastructure, potentially improving system scalability and performance.

Optionally, the TOTPs change at predetermined time intervals.

This enhances security by ensuring that each authentication code has a limited lifetime. By changing the TOTPs at predetermined intervals, the system significantly reduces the window of opportunity for potential attackers to use a compromised code.

Optionally, the identifier of the payment instrument is a token associated with the payment instrument.

Using a token as an identifier for the payment instrument, rather than the actual payment instrument details, improves security by avoiding the transmission or storage of sensitive payment information. This tokenization approach reduces the risk of sensitive data exposure in case of a breach. It also allows for more flexible and secure management of payment instruments, as tokens can be easily revoked or replaced without affecting the underlying payment instrument, providing an additional layer of protection for users' financial information.
Optionally, the system further comprises an independent monitoring system configured to monitor the status of the first computing system and activate a fallback mechanism to use static authentication codes responsive to unavailability of the first computing system.

The independent monitoring system increases the reliability and continuity of service by providing a fallback mechanism to static authentication when the dynamic system is unavailable. The independent monitoring system ensures that any issues with the primary authentication system are quickly detected. By automatically switching to static authentication codes in case of system unavailability, this feature ensures that users can still complete transactions even during unexpected outages or maintenance periods. This approach balances the enhanced security of dynamic codes with the need for consistent service availability, ultimately improving user trust and satisfaction.

Optionally, the independent monitoring system comprises a monitoring administrative module configured to receive status updates and control commands responsive to the status of the first computing device, and a security module monitor configured to check the availability of first computing system's services.

This monitoring and control mechanism can effectively manage the system's status and trigger fallback procedures when necessary. The monitoring administrative module provides real-time visibility into the system's performance and status, allowing for quick response to any issues. The security module monitor adds an extra layer of reliability by continuously checking the availability of critical services. Together, these components enable proactive management of the authentication system, minimising downtime and ensuring a better experience for users even in the face of potential system issues.

Optionally, the issuer system further comprises a connection management component configured to interact with the first computing system, and a payment verification component configured to send verification requests to the first computing system.

This feature provides comprehensive integration with existing payment systems, allowing for efficient management of connections, verifications, and cardholder updates. The connection management component ensures stable and secure communication between the issuer system and the authentication system. The payment verification component streamlines the process of sending and receiving verification requests, enabling quick and accurate transaction authentication. This structure facilitates seamless adoption of the dynamic authentication system by issuers, reducing implementation barriers and improving overall system efficiency.

Optionally, the first computing system is implemented using a distributed architecture across multiple locations, for example multiple geographic regions, for high availability and disaster recovery.

Implementing the system across multiple geographic regions significantly improves system reliability and disaster recovery capabilities. This distributed architecture ensures that the authentication service remains available even if one location experiences issues or outages. It provides redundancy and load balancing, allowing the system to handle high transaction volumes and maintain performance during peak times. Additionally, this approach enables faster response times for users in different parts of the world by routing requests to the nearest available system. The improved disaster recovery capabilities ensure business continuity and maintain user trust in the face of potential regional disruptions.

Viewed from a second aspect, the present invention provides a method for dynamic authentication in payment transactions. This method comprises receiving, by a first computing system communicatively couplable to a computer communications network, a request from a second computing system to activate a payment instrument. The method then involves generating an activation token responsive to the request and transmitting it to the second computing system. Subsequently, the method includes receiving an encrypted data item from the second computing system responsive to the second computing system receiving the activation token and storing the encrypted data item with an identifier of the payment instrument in a database. During a payment transaction, the method involves receiving a verification request from a payment instrument issuer system, wherein the verification request comprises a dynamic authentication code generated by the second computing system and provided to the payment issuer system by a user during the payment transaction. The method then includes retrieving the encrypted data item associated with the identifier of the payment instrument, validating the dynamic authentication code using the data item, and transmitting a verification result to the issuer system indicating whether the payment transaction is authenticated based on the validation outcome.

Optionally, the method further comprises generating, by a secure processing environment of the second computing system, the data item; encrypting the data item to create the encrypted data item; storing the data item within the second computing system; and generating the dynamic authentication code using the stored data item.

Optionally, the data item is a time-based one-time password (TOTP) secret key, and the dynamic authentication code is a TOTP generated using the TOTP secret key and a current time value.

Optionally, validating the dynamic authentication code comprises generating a verification TOTP using the decrypted secret and a time of the payment transaction, and comparing the generated verification TOTP with the received dynamic authentication code.

Optionally, the method further comprises generating, by the second computing system, dynamic authentication codes independent of further communication with the first computing system following activation and encrypted data item exchange until a deactivation request is received from the user via the second computing system or from the issuer system via the first computing system.

Optionally, the TOTPs change at predetermined time intervals.

Optionally, the identifier of the payment instrument is a token associated with the payment instrument rather than an actual payment instrument number.

Optionally, the method further comprises monitoring the status of the first computing system using an independent monitoring system, and activating a fallback mechanism to use static authentication codes when the cloud platform is unavailable.

Optionally, monitoring the status of the first computing system comprises receiving status updates and control commands via a monitoring administrative module, and checking the availability of the first computing system using a security module monitor.

Optionally, the method further comprises interacting with the first computing system using a connection management component of the issuer system, and sending verification requests to the first computing system using a payment verification backend of the issuer system.

Optionally, the first computing system is implemented using a distributed architecture across multiple locations, for example, multiple geographic regions for high availability and disaster recovery.

### Brief description of the figures

One or more embodiments in accordance with the invention will now be described, by way of non-limiting example only, and with reference to the accompanying drawings, in which:
Figure 1 is a high-level system diagram illustrating the components of a system, comprising the Portable Device, Issuer System, and Dynamic Authentication, according to an embodiment of the present invention;
Figure 2 is a simplified flowchart depicting the key steps in a method for utilising the system, in accordance with an embodiment of the present invention;
Figure 3 is a process flow diagram showing the first-time card activation procedure, according to an embodiment of the present invention;
Figure 4 is a process diagram illustrating the end-to-end flow of the dynamic authentication system, in accordance with an embodiment of the present invention;
Figure 5 is a diagram depicting the Azure-based cloud infrastructure deployment, according to an embodiment of the present invention

### Detailed description

In the following description, for the purposes of non-limiting explanation only, numerous specific details are set forth to provide a thorough understanding of the present disclosure. In other instances, well-known structures and devices are shown in block diagram form to avoid unnecessarily obscuring the present disclosure.

In one or more embodiments, the system facilitates dynamic authentication for secure online transactions. This approach is particularly effective for improving security in digital payment systems, where traditional static authentication methods may struggle to provide adequate protection against evolving cyber threats.

### System Overview

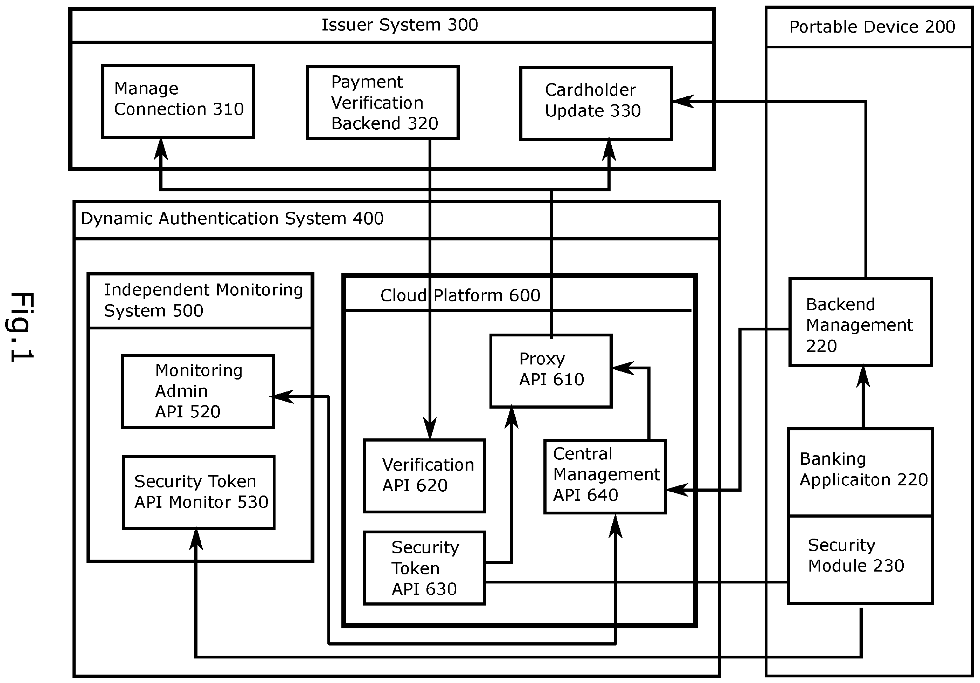

Fig. 1 is a high-level system diagram illustrating the components of the dynamic authentication system, according to an embodiment of the present invention. The system 100 comprises a Portable Device 200, an Issuer System 300, a Dynamic Authentication System 400 comprising an Independent Monitoring System 500, and a Cloud Platform 600.

The Portable Device 200 comprises a Banking Application 210, a Backend Management component 220, and a Security Module 230. The Banking Application 210 may serve as the user interface for cardholders to interact with the Dynamic Authentication System, which may be, for example, a mobile application running on a smartphone, tablet, or other computing device. The Backend Management 220 handles communication with the Issuer System 300 and the Dynamic Authentication System 400 and may include, but is not limited to, components for managing network connections, data synchronisation, and local data storage. The Security Module 230 is responsible for generating and managing cryptographic keys and tokens, which may include, for instance, hardware-backed key storage, secure enclaves, or software-based cryptographic libraries.

The Issuer System 300 comprises three main components: a Manage Connection 310, a Payment Verification Backend 320, and a Cardholder Update 330 module. These components facilitate the issuer's interaction with the dynamic authentication system 400, handle payment verification processes, and manage cardholder information updates respectively. The Issuer System 300 typically represents, without limitation, the infrastructure and systems of a financial institution, such as a bank, credit card company, or other entity that issues payment cards or manages financial accounts. For example, in one or more embodiments of the present invention, the Issuer System 300 may be the backend system of a large national bank that issues credit and debit cards to its customers.

The Dynamic Authentication System 400 comprises a Cloud Platform 600 which is configured to implement the dynamic credential generation and verification processes.

The Independent Monitoring System 500 comprises a Monitoring Admin API 520 and a Security Token API Monitor 530. These components provide oversight and monitoring capabilities to ensure the system's integrity and security.

The Cloud Platform 600 comprises a Proxy API 610, a Verification API 620, a Security Token API 630, and a Central Management API 640. These APIs are configured to facilitate communication between different system components, handle verification requests, manage security tokens, and provide centralised management capabilities.

It should be understood that while a bank is used in this example, the Issuer System 300 could represent any entity that needs to authenticate and verify transactions or identities in a secure, dynamic manner. This could include, without limitation, online payment platforms, cryptocurrency exchanges, or even non-financial systems that require high levels of security, such as government agencies or healthcare providers.

It should further be appreciated that while Fig. 1 depicts components as distinct entities, in practice, they may be implemented as software modules running on one or more physical servers or cloud-based virtual machines. Additionally, the components may be distributed across multiple geographic locations or cloud regions for redundancy and improved performance.

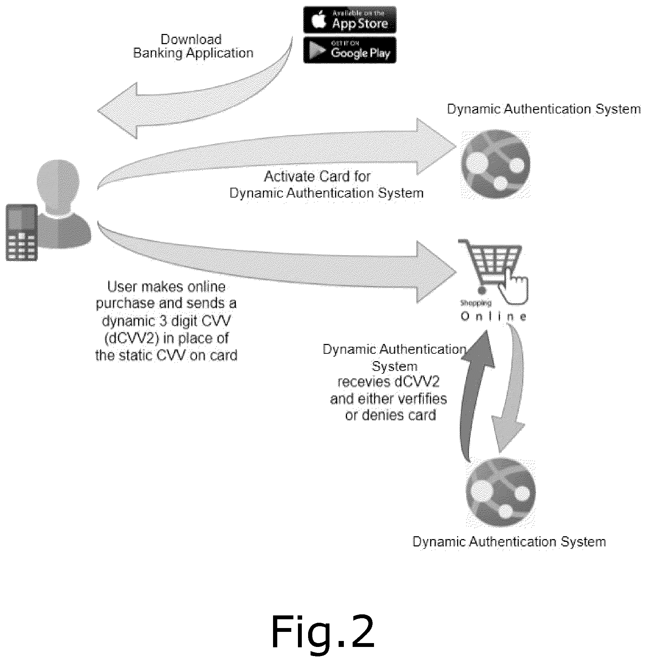

Fig. 2 is a simplified flowchart depicting the key steps in a method for utilising the dynamic authentication system, according to an embodiment of the present invention. This flowchart illustrates the high-level user journey from initially obtaining the Banking Application to completing a secure online transaction.

The process begins when a user downloads the Banking Application 210 onto their Portable Device 200. This Banking Application 210 may be, for example and without limitation, a mobile application provided by the user's financial institution and available through standard mobile app stores.

Following the download, the next step involves activating the user's payment instrument such as a card for use with the Dynamic Authentication System 400. This activation process establishes the secure link between the user's payment instrument, the Banking Application 210, and the Dynamic Authentication System 400.

Once activated, the Authentication System 400 is ready for use. When the user initiates an online purchase, instead of providing the static CVV printed on their physical card, the Banking Application 210 will generate a dynamic CVV (dCVV2). This dCVV2 is a time-based one-time password that serves as a secure, temporary credential for the transaction.

The dCVV2 is then sent to the Dynamic Authentication System 400 and relevant parts of the Cloud Platform 600, such as the Verification API 620. The system receives the dCVV2 and performs the verification process.

During verification, the system may perform various checks which may include, but are not limited to:
1. Validating the timestamp of the dCVV2 to ensure it is within the acceptable time window.
2. Verifying the cryptographic integrity of the dCVV2.
3. Checking that the dCVV2 corresponds to the correct user account and card.
4. Ensuring the transaction details align with the user's account status and any preset limits.

Based on these checks, the system either verifies or denies the card use. This decision is then communicated back through the established channels, ultimately determining whether the transaction is approved or decline.

### Card Activation and Secret Generation Process

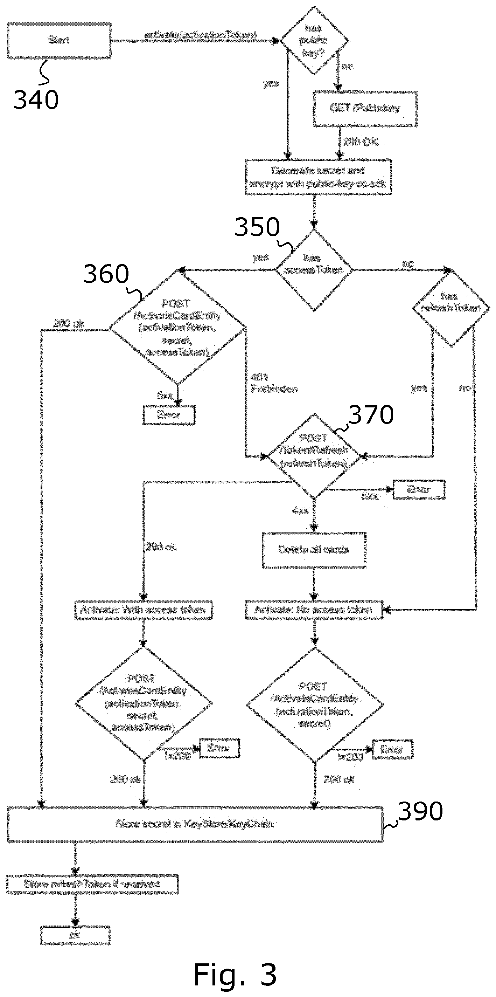

Fig. 3 is a process flow diagram depicting the first-time card activation procedure, according to an embodiment of the present invention. This diagram illustrates the steps involved in setting up a payment card for use with the system, including the cryptographic processes that ensure the security of the activation.

The process begins 340 with a check to determine if the Banking Application 210 on the Portable Device 200 has the necessary public key. If the public key is not present, the application may initiate a GET request to obtain the public key, which may be referred to as "public-key-sc-sdk". This public key ensures that the exchange of information between the Portable Device 200 and the Cloud Platform 600 is secure.

A GET request refers to a specific type of Hypertext Transfer Protocol (HTTP) request method. HTTP is a protocol used for transmitting data over the internet, and a GET request is one of several standard methods defined within this protocol. It should be appreciated that while a GET request is used in the described embodiment, the invention is not limited to this specific HTTP method. Other request methods or protocols could be employed to achieve the same purpose of securely obtaining the public key.

Once the public key is obtained, the process moves to the 'secret' generation phase beginning with checking if the Banking Application 210 has a valid access token 350. The Banking Application 210 is configured to generate a secret, which may be, for example, a Time-based One-Time Password (TOTP) cryptographically secure random data item. This secret is then encrypted using the public-key-sc-sdk, ensuring that it can only be decrypted by the corresponding private key held securely within the system, for example in the Dynamic Authentication System 400 or a secure part of the Cloud Platform 600.

The activation process diverges based on whether the Banking Application 210 has a valid access token 350. This token may be, for instance, a JSON Web Token (JWT) or any other suitable format for representing claims securely between parties. Regarding the presence or absence of a valid access token in the Banking Application 210, this aspect of the system relates to the authentication and authorisation of the application itself. The access token serves as a temporary credential that allows the Banking Application 210 to interact with the backend systems, including the Dynamic Authentication System 400 and relevant APIs in the Cloud Platform 600. The Banking Application 210 may or may not have a valid access token for several reasons, including but not limited to first-time use of the application 210, or token expiration because the user has not used the Banking Application 210 for an extended period.

If a valid access token is available, the application constructs a POST request to the "/ActivateCardEntity" endpoint 360. This request may comprise:
1. The activation token: A unique identifier provided by the Issuer System 300 during card issuance.
2. The encrypted secret: The result of encrypting the generated secret with public-key-sc-sdk.
3. The access token: The current valid access token.

If no valid access token is available, the application first attempts to refresh the token. It sends a POST request to the "/Token/Refresh" endpoint, including a refresh token 370. This refresh token is a long-lived credential that allows the application to obtain a new access token without requiring full re-authentication.

If the token refresh is successful, the application proceeds with the activation request as described above. If unsuccessful, it falls back to an activation method that doesn't require an access token. In this case, the POST request to "/ActivateCardEntity" which comprises only the activation token and the encrypted secret.

Upon receiving a successful response (indicated by a 200 OK status), the Banking Application 210 is configured to store the secret 390. On Android devices, this may involve using the KeyStore system, while on iOS devices, the Keychain may be utilised. These secure storage mechanisms protect the secret from unauthorised access, even if the device is compromised.

The stored secret forms the basis for future dynamic CVV generation. It may be used, for example, as a seed for a Time-based One-Time Password (TOTP) algorithm, which generates unique, time-sensitive codes for each transaction.

Throughout this process, error handling mechanisms are in place. If any step fails (indicated by 4xx or 5xx HTTP status codes), appropriate procedures are initiated. These may include retrying the request with exponential backoff, alerting the user with an appropriate error message, or logging the error for later analysis by the system administrators.

This activation process establishes a secure foundation for all future dynamic authentication operations. It creates a trusted channel between the Portable Device 200 and the backend systems, allowing for the secure generation and verification of dynamic CVVs.

### Secure Authentication Process and Time-Synchronized Code Generation

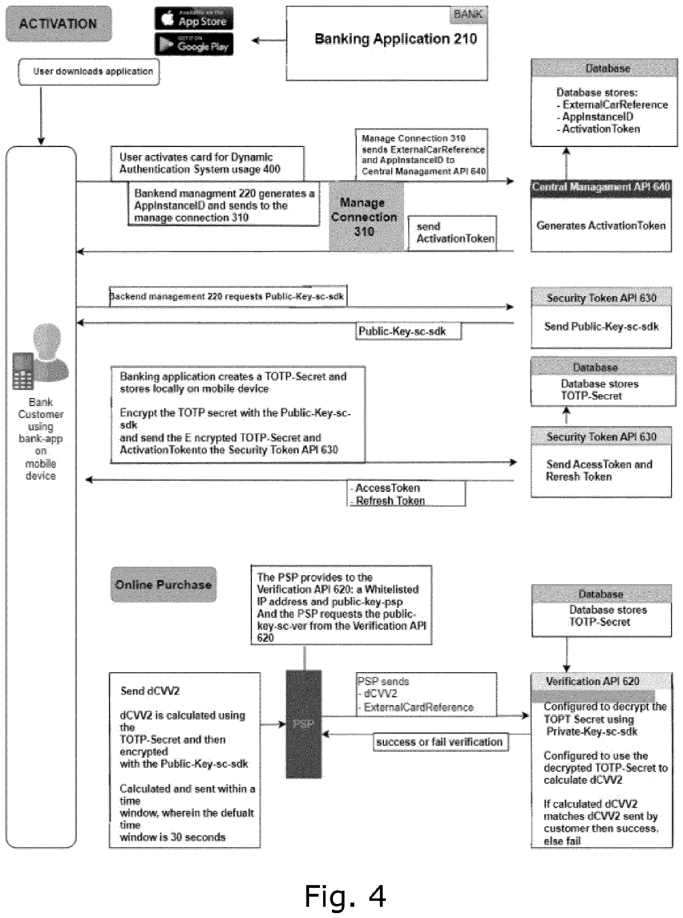

Fig. 4 is a process diagram illustrating the end-to-end flow of the dynamic authentication system, according to an embodiment of the present invention

The process flow begins with a user downloading a banking application 210 onto their portable device 210. This application 210 serves as the primary interface for the user to interact with the Dynamic Authentication System 400. Upon launching the banking application, the user initiates the process to activate a payment instrument such as a 'credit card or debit card' for use with the Dynamic Authentication System 400.

The Backend Management 220 component is configured to generate a unique AppInstanceID, where the AppInstanceID is a randomly generated string that uniquely identifies the specific installation of the Banking Application 210 on the user's device, distinguishing a particular instance of the Banking Application 210 from others that might be installed on different devices or by different users.

The Backend Management module 220 is configured to communicate with the Manage Connection component 310 within the Issuer System 300. It sends the generated AppInstanceID to initiate the activation process. This step establishes the link between the specific instance of the banking application and the user's card in the Issuer's system.

In response to receiving the AppInstanceID, the Issuer System's Manage Connection component 310 is configured to generate an ExternalCardReference. This ExternalCardReference is a unique identifier for the user's card within the system, created to avoid storing sensitive card details directly in subsequent processes. It serves as a secure proxy for the actual card information throughout the authentication process.

The Manage Connection component 310 is then configured to transmit both the ExternalCardReference and the received AppInstanceID to the Central Management API 640 hosted on the Cloud Platform 600. This API is responsible for coordinating the activation process and managing the overall system state.

Upon receiving this information, the Central Management API is configured to generate a unique Activation Token. This token serves as a temporary credential for the ongoing activation process, ensuring that only legitimate activation attempts proceed.

The Central Management API 640 is then configured to store the ExternalCardReference, AppInstanceID, and Activation Token in a secure database within the Cloud Platform 600. This database serves as a central repository for all active devices and their associated credentials, allowing for efficient management and authentication of devices and cards.

Subsequently, the Backend Management module 220 requests the Public_Key-sc-sdk from the Security Token API. This public key is used for the subsequent encryption steps. The Public_Key-sc-sdk is part of a public-private key pair generated by the Security Token API. The private key of this pair is securely stored within the Cloud Platform 600 and is never shared, while the public key is distributed to the banking application 210 for encryption purposes.

With the Public_Key-sc-sdk in hand, the banking application 210 on the portable device is configured to generate a Time-based One-Time Password (TOTP) secret via the security module 230. This TOTP secret may be a cryptographically secure random value that serves as the basis for generating dynamic CVV codes. This secret is generated and stored locally within the Security Module 230 of the Portable Device 200 leveraging the device's built-in security features to protect it from unauthorised access. This enhances security by reducing the risk of interception during transmission and allowing for offline generation of authentication codes.

The banking application 210 is then configured to encrypt the TOTP secret using the Public_Key-sc-sdk. This encryption ensures the confidentiality of the secret during transmission over potentially insecure networks. The encrypted TOTP secret, along with the Activation Token, is sent by the banking application 210 to the Security Token API 630 on the Cloud Platform 600.

Upon receiving this data, the Security Token API is configured to store the encrypted TOTP secret in the database, associating it with the corresponding user and device information. This storage of the TOTP secret on both the Portable Device 200 and the Cloud Platform 600 allows the system to operate without constant communication between the two. Both ends of the system can independently generate the same dynamic CVV codes based on this shared secret and the current time.

This step completes the secure storage of all necessary components for future authentication processes.

The Security Token API 630 is then configured to generate an Access Token and a Refresh Token. These tokens are used to maintain a secure, ongoing communication between the portable device 200 and the Cloud Platform 600. The Access Token is a short-lived credential used for immediate authentication, while the Refresh Token is a long-lived credential used to obtain new Access Tokens without requiring the user to re-authenticate.

These tokens are sent back to the banking application 210 via the security token API 630 on the portable device and are securely stored for future authentication purposes. This completes the initialisation and activation process of the payment instrument.

When a transaction is initiated, the banking application 210 is configured to calculate a dynamic CVV (dCVV2) using the stored TOTP secret. This dCVV2 is generated within a specific time window, typically 30 seconds, to ensure its validity and uniqueness for each transaction. The user then uses this dCVV2 in place of the static CVV printed on their card when making a transaction.

The Payment Service Provider (PSP) system, which processes the transaction, has previously established a secure connection with the Verification API 620. This connection is secured using a separate set of cryptographic keys: the PSP provides its public key (Public_Key-psp) to the Verification API 620, and in return receives the Verification API's public key (Public_Key-sc-ver). These keys are used to establish a secure, encrypted channel for communication between the PSP and the Verification API 620.

When a transaction is made, the PSP is configured to send the transaction details, comprising the dCVV2 and ExternalCardReference, to the Verification API 620 for authentication. The Verification API is configured to retrieve the encrypted TOTP secret from the database and decrypt it using the Private_Key-sc-sdk, which is the private counterpart to the Public_Key-sc-sdk used earlier for encryption.

The Verification API 620 is then configured to use this decrypted TOTP secret to calculate the expected dCVV2 for the given time window, typically 30 seconds. It compares this calculated dCVV2 with the one provided in the transaction. If they match, the transaction is authenticated successfully; otherwise, it is rejected. The authentication result is communicated back to the PSP, which then proceeds with or declines the transaction accordingly.

Throughout this entire process, an Independent Monitoring System 500 is configured to oversee the operation of various components, particularly the Security Token API 630. This system ensures the integrity and performance of the authentication process, providing an additional layer of security and reliability to the overall system.

The Monitoring Admin API 520 provides an interface for system administrators to access real-time and historical data about the system's performance and security status. This may comprise but is not limited to: Transaction volumes and patterns, Authentication success and failure rates, Response times of various system components, Unusual activity or potential security threats, System resource utilisation. Through detailed performance metrics, the Independent Monitoring System 500 enables system administrators to identify bottlenecks or inefficiencies in the authentication process.

The Security Token API Monitor 530 is configured to monitor the generation, distribution, and usage of security tokens within the system. This component may be configured to perform functions such as: Tracking the lifecycle of access tokens and refresh tokens, Monitoring for unusual patterns in token requests or usage, Ensuring compliance with defined security policies regarding token expiration and renewal Detecting potential token-based attacks, such as replay attacks or token theft attempts. By continuously monitoring the system the Independent Monitoring System 500 can be configured to detect potential security threats or anomalies in real-time, allowing for swift response to any issues.

The Independent Monitoring System 500 operates without direct interaction with the core authentication flow, reducing the likehood that its activities impact the performance or security of the main system. However, it can trigger alerts or even initiate automatic responses to critical issues, such as temporarily blocking suspicious IP addresses or forcing token renewals in case of detected security threats.

It should be appreciated that the system 100 can generate unique, time-dependent authentication codes without requiring constant communication between the Portable Device 200 and the Cloud Platform 600. Moreover, the time-synchronised nature of the TOTP algorithm ensures that each dCVV2 is valid only for a short period, typically 30 seconds, significantly reducing the window for potential attacks.

### Cloud Infrastructure and Geographical Redundancy

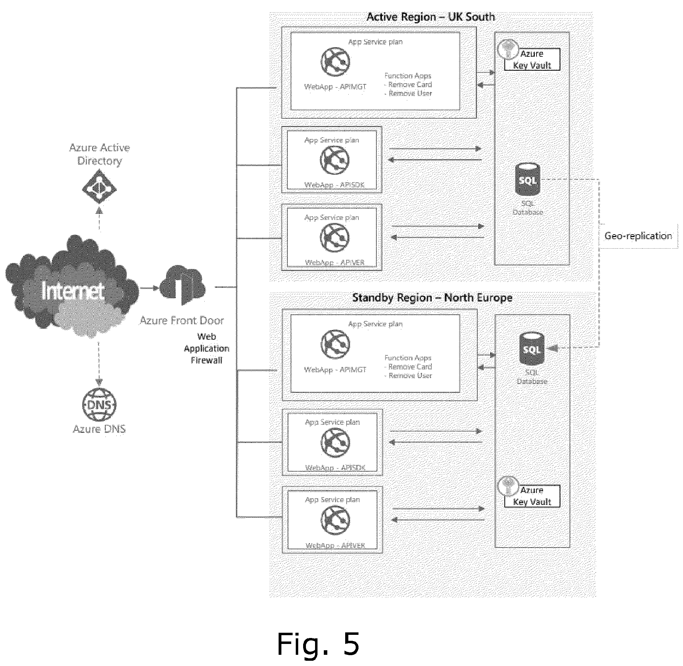

Fig. 5 is a diagram illustrating the cloud infrastructure deployment of the dynamic authentication system, according to an embodiment of the present invention. This diagram showcases the system's robust, scalable, and geographically redundant architecture, which ensures high availability and disaster recovery capabilities.

The cloud infrastructure is built on a major cloud computing platform, which may be, for example and without limitation, Microsoft Azure, Amazon Web Services (AWS), or Google Cloud Platform (GCP). The system may be deployed across one or more geographical regions: an Active Region and a Standby Region. In this non-limiting example, these regions are depicted as UK South and North Europe, respectively. This dual-region setup provides geographical redundancy and enables the system to maintain operations even in the event of a regional outage.

At the entry point of the system is a global load balancer and application delivery network. This component routes incoming requests to the nearest point of presence and directs traffic to the most appropriate backend based on various factors such as health, performance, and geographical proximity.

Behind the global load balancer is a Web Application Firewall (WAF), which provides centralised protection against common web vulnerabilities and exploits. This adds a layer of security to the entire system, filtering out malicious traffic before it reaches the application components.

The system utilises a cloud-based identity and access management service for authentication and authorization. This service, corresponding to parts of the Security Token API 630 from Figure 1, handles authentication and authorization for both internal system components and external user access.

A Domain Name System (DNS) service is employed for domain name resolution, ensuring efficient and reliable routing of requests to the appropriate services within the cloud ecosystem.

In each region (Active and Standby), the following components are deployed:
1. Web Application Hosting Environments: These provide the hosting environment for the various web applications and APIs that make up the system. In each region, there may be multiple hosting environments for different components: a. the Proxy API 610, handling SDK-related operations. b. the Verification API 620, responsible for verification processes. c. the Central Management API 640, managing various system operations.
2. Serverless Function Services: These host two specific functions: a. Remove Card b. Remove User These functions may handle user and card deactivation processes, which are critical for maintaining system security and data integrity.
3. Secure Key Management Service: This secure storage service, corresponding to parts of the Security Token API 630 from Figure 1, is used for managing cryptographic keys, secrets, and certificates used throughout the system.
4. Relational Database Service: This represents the system's primary data store, likely containing user information, transaction logs, and other essential data. The databases in the two regions are connected via geo-replication, ensuring data consistency and enabling quick failover in case of a regional outage.

Insofar as embodiments of the invention described above are implementable, at least in part, using a software-controlled programmable processing device such as a general purpose processor or special-purposes processor, digital signal processor, microprocessor, or other processing device, data processing apparatus or computer system it will be appreciated that a computer program for configuring a programmable device, apparatus or system to implement methods and apparatus is envisaged as an aspect of the present invention. The computer program may be embodied as any suitable type of code, such as source code, object code, compiled code, interpreted code, executable code, static code, dynamic code, and the like. The instructions may be implemented using any suitable high-level, low-level, object-oriented, visual, compiled and/or interpreted programming language, such as, Liberate, OCAP, MHP, Flash, HTML and associated languages, JavaScript, PHP, C, C++, Python, Nodejs, Java, BASIC, Perl, Matlab, Pascal, Visual BASIC, ActiveX, assembly language, machine code, and so forth. A skilled person would readily understand that term "computer" in its most general sense encompasses programmable devices such as referred to above, and data processing apparatus and computer systems.

Suitably, the computer program is stored on a carrier medium in machine readable form, for example the carrier medium may comprise memory, removable or non-removable media, erasable or non-erasable media, writeable or re-writeable media, digital or analogue media, hard disk, floppy disk, Compact Disk Read Only Memory (CD-ROM), Company Disk Recordable (CD-R), Compact Disk Rewriteable (CD-RW), optical disk, magnetic media, magneto-optical media, removable memory cards or disks, various types of Digital Versatile Disk (DVD) subscriber identity module, tape, cassette solid-state memory. The computer program or elements thereof may be stored transiently as part of their execution or implementation. The computer program may be supplied from a remote source embodied in the communications medium such as an electronic signal, radio frequency carrier wave or optical carrier waves. Such carrier media are also envisaged as aspects of the present invention.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

In view of the foregoing description, it will be evident to a person skilled in the art that various modifications may be made within the scope of the invention.

The activation process could be modified to include additional authentication factors beyond the current AppInstanceID and ExternalCardReference. For instance, biometric data or a user-specific passphrase could be incorporated to further strengthen the security of the card activation procedure.

The system's architecture could be expanded to support multiple cloud providers simultaneously, rather than relying solely on Azure. This multi-cloud approach could enhance disaster recovery capabilities and provide additional redundancy beyond the current primary and secondary region setup.

Alternative methods for storing the TOTP secret on mobile devices could be explored. While the current system uses platform-specific secure storage (iOS Keychain and Android Keystore), future implementations might leverage emerging hardware-based security features or trusted execution environments for even greater protection of the secret.

The communication protocol between the PSP and the Verification API could be enhanced to include additional contextual data about transactions. This extra information could be used to implement more sophisticated fraud detection algorithms within the verification process.

The system could be adapted to support variable time windows for the validity of dCVV2 codes. Instead of a fixed 30-second window, the duration could be dynamically adjusted based on factors such as transaction risk level, user history, or network latency conditions.

The scope of the present disclosure includes any novel feature or combination of features disclosed herein either explicitly or implicitly or any generalisation thereof irrespective of whether or not it relates to the claimed invention or mitigates against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

## Claims

1. A system for dynamic authentication of a payment transaction, comprising:
a first computing system communicatively couplable to a computer communications network, wherein the first computing system is configured to:
receive from a second computing system communicatively couplable to the computer communications network a request to activate a payment instrument;
generate an activation token responsive to the request and transmit the activation token over the computer communications network to the second computing system;
receive over the computer communications network an encrypted data item from the second computing system responsive to the second computing system receiving the activation token;
store the encrypted data item with an identifier of the payment instrument in a database;
and, during a payment transaction:
receive, over the computer communications network, a verification request from a payment instrument issuer system communicatively couplable to the computer communications network, wherein the verification request comprises a dynamic authentication code generated by the second computing system and provided to the payment issuer system by a user during the payment transaction;
retrieve the encrypted data item associated with the identifier of the payment instrument;
validate the dynamic authentication code using the data item; and
transmit a verification result to the issuer system indicating whether the payment transaction is authenticated based on the validation outcome.

2. A system according to claim 1, wherein the second computing system further comprises:
an application configured to interact with the first computing system over the computer communications network; and
a secure processing environment configured to:
generate the data item;
encrypt the data item to create the encrypted data item;
store the encrypted data item in the second computing system; and
generate a dynamic authentication code using the stored data item.

3. A system according to claim 2, wherein the encrypted data item is a time-based one-time password (TOTP) secret key; and the dynamic authentication code is a TOTP generated using the TOTP secret key and a current time value.

4. A system according to claim 3, wherein validating the dynamic authentication code comprises:
generating a verification TOTP using the decrypted data item and a time of the payment transaction;
comparing the generated verification TOTP with the received dynamic authentication code.

5. A system according to claim 2, the second computing device configured to generate dynamic authentication codes independent of further communications with the first computing system following activation and encrypted data item exchange until a deactivation request is received from the user or the issuer system.

6. A system according to claim 3, wherein the TOTPs change at predetermined time intervals.

7. A system according to any preceding claim, wherein the identifier of the payment instrument is a token associated with the payment instrument.

8. A system according to any preceding claim, further comprising an independent monitoring system configured to:
monitor the status of the first computing system; and
activate a fallback mechanism to use static authentication codes responsive to unavailability of the first computing system.

9. A system according to claim 8, wherein the independent monitoring system comprises:
a monitoring administrative module configured to receive status updates and control commands responsive to the status of the first computing device; and
a security module monitor configured to check the availability of first computing system.

10. A system according to any preceding claim, wherein the issuer system further comprises:
a connection management component configured to interact with the first computing system;
a payment verification component configured to send verification requests to the first computing system.

11. A system according to any preceding claim, wherein the first computing system is implemented using a distributed architecture across multiple locations, for example multiple geographic regions, for high availability and disaster recovery.

12. A method for dynamic authentication in payment transactions, comprising:
receiving, by a first computing system communicatively couplable to a computer communications network, a request from a second computing system to activate a payment instrument;
generating, an activation token responsive to the request and transmitting it to the second computing system;
receiving, an encrypted data item from the second computing system responsive to the second computing system receiving the activation token;
storing the encrypted data item with an identifier of the payment instrument in a database;
and, during a payment transaction:
receiving, a verification request from a payment instrument issuer system, wherein the verification request comprises a dynamic authentication code generated by the second computing system and provided to the payment issuer system by a user during the payment transaction;
retrieving the encrypted data item associated with the identifier of the payment instrument;
validating the dynamic authentication code using the data item; and
transmitting a verification result to the issuer system indicating whether the payment transaction is authenticated based on the validation outcome.

13. A method of claim 12, further comprising:
generating, by a secure processing environment of the second computing system, the data item;
encrypting the data item to create the encrypted data item;
storing the data item within the second computing system; and
generating the dynamic authentication code using the stored data item.

14. A method of claim 13, wherein the data item is a time-based one-time password (TOTP) secret key, and the dynamic authentication code is a TOTP generated using the TOTP secret key and a current time value.

15. A method of claim 14, wherein validating the dynamic authentication code comprises:
generating a verification TOTP using the decrypted secret and a time of the payment transaction;
comparing the generated verification TOTP with the received dynamic authentication code.

16. A method of claim 13, further comprising:
generating, by the second computing system, dynamic authentication codes independent of further communication with the first computing system following activation and encrypted data item exchange until a deactivation request is received from the user via the second computing system or from the issuer system via the first computing system.

17. A method of claim 14, wherein the TOTPs change at predetermined time intervals.

18. A method of any preceding claim, wherein the identifier of the payment instrument is a token associated with the payment instrument rather than an actual payment instrument number.

19. A method of any preceding claim, further comprising:
monitoring the status of the first computing system using an independent monitoring system;
activating a fallback mechanism to use static authentication codes when the cloud platform is unavailable

20. A method of claim 19, wherein monitoring the status of the first computing system comprises: receiving status updates and control commands via a monitoring administrative module; and checking the availability of the first computing system using a security module monitor.

21. A method of any preceding claim, further comprising:
interacting with the first computing system using a connection management component of the issuer system;
sending verification requests to the first computing system using a payment verification backend of the issuer system.

22. A method of any preceding claim, wherein the first computing system is implemented using a distributed architecture across multiple locations, for example, multiple geographic regions for high availability and disaster recovery.
